# EUROPÄISCHE PATENTSCHRIFT

(11) **EP 1 057 553 B1**
(45) Veröffentlichungstag und Bekanntmachung des Hinweises auf die Patenterteilung: **24.11.2004**
(21) Anmeldenummer: 00810380.6
(22) Anmeldetag: 03.05.2000
(51) Int. Cl.: B21G 3/18

(54) **Herstellverfahren eines Befestigungselementes**
Method for manufacturing a fastening element
Procédé de fabrication d'un élément de fixation

(30) Priorität: 31.05.1999 DE 19924903
(43) Veröffentlichungstag der Anmeldung: 06.12.2000
(73) Patentinhaber: HILTI Aktiengesellschaft, 9494 Schaan (LI)
(72) Erfinder: Bömcke, Christian, 6832 Röthis (AT)
(74) Vertreter: Wildi, Roland

(56) Entgegenhaltungen:
- US-A- 2 612 063
- US-A- 3 218 136
- US-A- 3 588 933
- US-A- 5 378 205

## Beschreibung

Die Erfindung betrifft ein Verfahren zur Herstellung von Befestigungselementen gemäss dem Oberbegriff des Patentanspruchs 1.

Zur Herstellung von Befestigungselementen ist ein Verfahren bekannt, bei dem in einem ersten Schritt von einem Draht ein zylindrischer Rohling abgetrennt wird, dessen Länge grösser ist als die fertige Länge des herzustellenden Befestigungselementes. Anschliessend wird an einem ersten Endbereich des Rohlings ein Kopf angestaucht und ein zweiter Endbereich durch einen Hämmerprozess mit einer Spitze versehen. Beim Hämmern wird das zylindrische Schaftende im kalten Zustand durch die Schlagbewegung zweier Hammerbacken zu einer balligen Form umgeformt.

Da das Hämmern einen sehr hohen Schallpegel verursacht, müssen die entsprechenden Anlagen gekapselt und der Arbeitsplatz als Lärmschutzzone gekennzeichnet sein, in der das Tragen von Gehörschutz vorgeschrieben ist. Die Kapselung einer Anlage verschlechtert ausserdem deren Zugänglichkeit und damit die Ergonomie des Arbeitsplatzes.

Ein weiterer Nachteil, den das Hämmern mit sich bringt ist der hohe Verschleiss, dem die Hammerbacken unterliegen. Dieser im wesentlichen kontinuierlich stattfindende Verschleiss führt zudem dazu, dass sich laufend die Form der angeformten Spitze ändert und somit auch deren Qualität verschlechtert.

Da ausserdem für jedes Befestigungselement ein eigener Rohling bereitgestellt werden muss, ergeben sich insgesamt eine geringe Fertigungsleistung und damit zusammenhängende hohe Herstellkosten.

Aus der US 2 612 063 ist eine Maschine und ein Verfahren zum Herstellen von Eggenzähnen bekannt. Ein Stab wird dort zunächst an seinem zentralen Abschnitt und seinen beiden Enden erhitzt, nachfolgend an den Abschnitten, die an den zentralen Abschnitt angrenzen, jeweils zwischen zwei sich gegenüberliegenden Greifern der Maschine kraftschlüssig eingespannt und dann auseinander gezogen. Im Anschluss an das Auseinanderziehen des Stabes wird an jedem der beiden entstandenen Zähne jeweils ein Kopf angeformt um die Eggenzähne fertig zu stellen.

Der Erfindung liegt die Aufgabe zugrunde, ein Verfahren zur Herstellung von Befestigungselementen zu schaffen, mit dem eine höhere Fertigungsleistung, geringe Herstellkosten, eine konstante Qualität der Spitzen, eine verschleissfreie Herstellung der Spitze und eine Reduktion der Lärmemissionen erreicht werden kann.

Die Lösung dieser Aufgaben erfolgt mit einem Verfahren zur Herstellung von Befestigungselementen, welches die im kennzeichnenden Abschnitt des Patentanspruchs 1 angeführten Merkmale aufweist.

Mit dem erfindungsgemässen Verfahren ist es möglich, die Herstellkosten sehr gering zu halten. Dadurch, dass aus einem Rohling zwei Befestigungselemente hergestellt werden können, lässt sich ausserdem eine sehr hohe Fertigungsleistung erzielen. Die unter Einwirkung von Wärme und Zugkraft stattfindende Spitzenherstellung erfolgt vollständig verschleissfrei und ausserdem wird eine konstante Spitzenqualität erreicht.

Zweckmässigerweise werden Köpfe mit einer die Aussenkontur des Rohlings in einer senkrecht zur Längserstreckung des Rohlings verlaufenden Richtung übersteigenden Aussenkontur angestaucht. Die auf diese Weise ausgebildeten Befestigungselemente eignen sich insbesondere für die Befestigung von Bauteilen an einem Untergrund, wobei die Bauteile von dem Kopf des Befestigungselementes gegen die Oberfläche des Untergrundes gedrückt werden.

Eine gute, schnelle Verformung des Abschnittes beim Auseinanderziehen des Rohlings wird erreicht, indem vorzugsweise der zwischen den Köpfen liegende Abschnitt auf 900º C bis 1200º C erwärmt wird.

Die Länge der ballig-konischen Spitze der Befestigungselemente hängt ab von der Länge des erwärmten Abschnittes. Eine gutes Eintreibverhalten des Befestigungselementes in einen Untergrund und eine hohe Festigkeit der Spitze wird erreicht, indem vorzugsweise die Länge des Abschnittes einer 2- bis 8 fachen, senkrecht zur Längserstreckung des Rohlings verlaufenden Stärke entspricht.

Damit die Erwärmung des Rohlings schnell erfolgt, wird vorteilhafterweise der Abschnitt induktiv erwärmt. Diese induktive Erwärmung wird beispielsweise mit Hilfe eines Induktors erreicht, durch den der zu erwärmende Abschnitt des Rohlings hindurchgeführt wird. Dieser Induktor ist zwischen beiden Köpfen versetzbar. Somit ist auch die Lage des Abschnittes veränderbar. Durch die Verschiebbarkeit des Induktors wird die Möglichkeit geschaffen, aus einem Rohling zwei Befestigungselemente mit der gleichen Länge oder zwei Befestigungselemente mit unterschiedlicher Länge auszubilden.

Vorteilhafterweise wird der Abschnitt durch Angreifen von Zugwerkzeugen an den Köpfen axial auseinandergezogen. Die Köpfe weisen zu diesem Zweck einander zugewandte, ringförmige Schultern auf, an der sich die Zugwerkzeuge besonders gut abstützen können, ohne dass eine Beschädigung der Köpfe stattfindet.

Um die dem Auseinanderziehen des Rohlings dienende Vorrichtung wirtschaftlich herstellen zu können, wird zweckmässigerweise die zum Auseinanderziehen des Rohlings notwendige Zugkraft von einer Feder aufgebracht, die bis zum Ende der Erwärmung des Abschnittes von der Vorrichtung in einer vorgespannten Stellung gehalten und anschliessend an die Erwärmung des Abschnittes freigegeben wird.

Die für das Auseinanderziehen des Abschnittes erforderliche Zugkraft hängt ab von dem Material des Rohlings, von der Grösse der Querschnittsfläche, von der Höhe der Erwärmung und von der geforderten Spitzengeometrie. Zweckmässigerweise wird daher eine Zugkraft auf den Rohling aufgebracht, die 200N bis 2000N beträgt.

Die Geometrie der Spitze wird beispielsweise durch die zugeführte Wärmeenergie, die Zugkraft und die Geschwindigkeit mit der der Rohling auseinandergezogen wird beeinflusst. Wird dem Abschnitt beispielsweise sehr viel Wärmeenergie zugeführt oder der Rohling mit einer grossen Zugkraft auseinandergezogen, so weisen die Spitzen beider Nägel eine grosse Länge und einen kleinen Spitzenwinkel auf. Beim Zuführen von wenig Wärmeenergie oder beim Aufbringen einer geringen Zugkraft auf den Rohling, weisen die Spitzen der Nägel eine kleine Länge und eine grossen Spitzenwinkel auf.

Nach dem Aufstauchen der Köpfe und vor dem Erwärmen des Abschnittes findet beispielsweise ein Waschvorgang statt, der dazu dient, die Phosphatschicht und die für den Umformvorgang der Endbereiche des Rohlings notwendigen Schmiermittel vom Rohling zu entfernen.

Um die Befestigungselemente beispielsweise mittels eines Setzgerätes zu verwenden, müssen diese eine entsprechende Härte aufweisen. Das Härten ist beispielsweise ein weiterer Verfahrensschritt, der nach dem Auseinanderziehen des Rohlings in zwei Befestigungselemente erfolgt.

Ein besonders gutes Eintreibverhalten der Befestigungselemente in einen Untergrund wird erreicht, wenn diese mit einer Zinkschicht überzogen werden. Diese Zinkschicht wirkt als Gleit- und Schmiermittel.

Die Erfindung wird anhand von Zeichnungen, die einzelne Verfahrensschritte eines Ausführungsbeispieles wiedergeben, näher erläutert. Es zeigen:
- Fig.1: einen Rohling mit geeigneter Länge;
- Fig. 2: den Rohling gemäss Fig. 1 mit zwei angestauchten Köpfen;
- Fig. 3: den Rohling gemäss Fig. 2, dessen Köpfe mit Zugwerkzeugen zusammenwirken;
- Fig. 4: den Rohling gemäss Fig. 2 nach dem Erwärmen eines zwischen den Köpfen liegenden Abschnittes beim Auseinanderziehen des Rohlings mit Hilfe der Zugwerkzeuge;
- Fig. 5: den Rohling gemäss Fig. 2 nach dem Auseinanderziehen und dem Trennen in zwei Befestigungselemente.

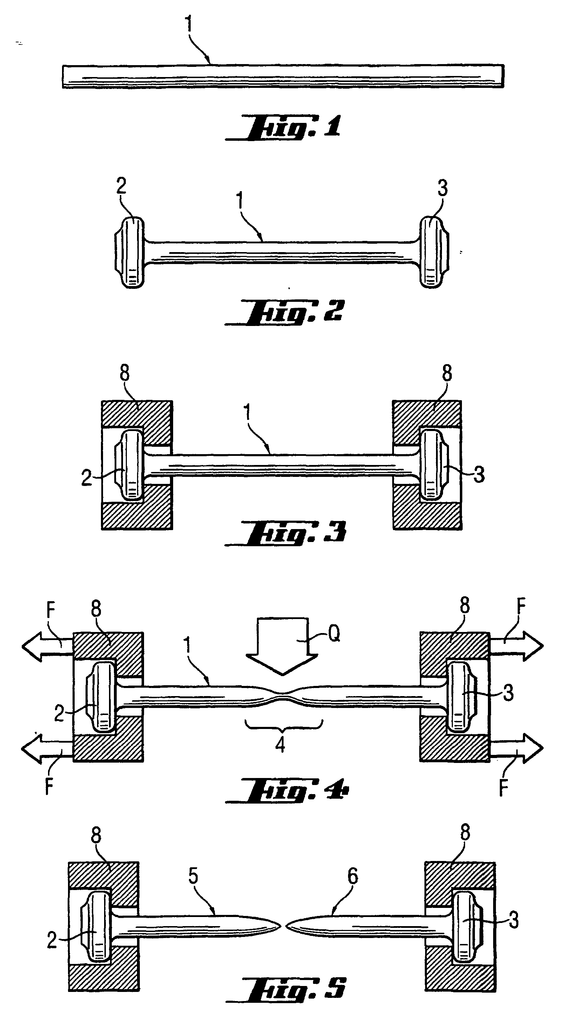

Die Fig. 1 zeigt einen zylindrischen Rohling 1, mit einer geeigneten Länge, nach dem Ablängen von einem nicht näher dargestellten Draht. Der Rohling 1 weist einen kreisrunden Querschnitt und eine Gesamtlänge auf, die grösser ist als die doppelte Länge eines in Fig. 5 dargestellten Befestigungselementes 5, 6.

Wie in der Fig. 2 dargestellt ist, werden mit Hilfe eines Anstauchprozesses beide Endbereiche des Rohlings 1 mit jeweils einem Kopf 2, 3 versehen, wobei beide Köpfe 2, 3 den gleichen Durchmesser und im wesentlichen das gleiche Volumen sowie einen Durchmesser aufweisen, die den Durchmesser des ursprünglichen Rohlings 1 überragen.

In der Fig. 3 bis 5 ist der Rohling 1 mit seinen beiden Köpfen 2, 3 in zwei voneinander beabstandeten Zugwerkzeugen 8 einer nicht näher dargestellten Vorrichtung angeordnet, mit der über die Köpfe 2, 3 eine Zugkraft F in einer parallel zur Längserstreckung des Rohlings 1 verlaufenden Richtung auf den Rohling 1 ausgeübt werden kann.

Aus der Fig. 4 ist entnehmbar, dass der in den Zugwerkzeugen 8 eingesetzte Rohling 1 mit einer Zugkraft F beaufschlagt und in einem zwischen beiden Köpfen 2, 3 liegenden Abschnitt 4 erwärmt wird. Die auf den Abschnitt 4 einwirkende Wärmeenergie Q und anschliessend auf die von den Zugwerkzeugen 8 auf den Rohling 1 einwirkende Zugkraft F führt dazu, dass sich der zwischen den Köpfen 2, 3 liegende Abschnitt 4 zur Bildung von zwei Spitzen bis zu seiner Trennung in einer beispielsweise konisch-balligen Form verjüngt, wie dies in Fig. 5 dargestellt ist.

Damit Befestigungselemente 5, 6 mit unterschiedlichen Längen erzeugt werden können, lässt sich beispielsweise ein der Erzeugung der Wärmeenergie Q dienender, nicht näher dargestellter Induktor zwischen beiden Köpfen 2, 3 des Rohlings 1 verschieben.

## Patentansprüche

1. Verfahren zur Herstellung von Befestigungselementen (5, 6), durch Anstauchen eines Kopfes (2, 3) an einem Endbereich sowie Anformen einer Spitze am anderen Endbereich, **dadurch gekennzeichnet, dass** an beiden Endbereichen eines die Länge von zwei Befestigungselementen (5, 6) übersteigenden Rohlings (1) je ein Kopf (2, 3) angestaucht und nach Erwärmen eines zwischen den angestauchten Köpfen (2, 3) liegenden Abschnittes (4) der Rohling (1) bis zu seiner Trennung im erwärmten Abschnitt (4) axial auseinandergezogen wird.

2. Verfahren nach Anspruch 1, **dadurch gekennzeichnet, dass** Köpfe (2, 3) mit einer die Aussenkontur des Rohlings (1) in einer senkrecht zur Längserstreckung des Rohlings (1) verlaufenden Richtung übersteigenden Aussenkontur angestaucht werden.

3. Verfahren nach Anspruch 1 oder 2, **dadurch gekennzeichnet, dass** der zwischen den Köpfen (2, 3) liegende Abschnitt (4) auf 900º C bis 1200º C erwärmt wird.

4. Verfahren nach einem der Ansprüche 1 bis 3, **dadurch gekennzeichnet, dass** die Länge des Abschnittes (4) einer 2- bis 8-fachen, senkrecht zur Längserstreckung des Rohlings (1) verlaufenden Stärke entspricht.

5. Verfahren nach einem der Ansprüche 1 bis 4, **dadurch gekennzeichnet, dass** der Abschnitt (4) induktiv erwärmt wird.

6. Verfahren nach einem der Ansprüche 1 bis 5, **dadurch gekennzeichnet, dass** der Rohling (1) durch angreifen von Zugwerkzeugen (8) an den Köpfen (2, 3) axial auseinandergezogen wird.

7. Verfahren nach Anspruch 6, **dadurch gekennzeichnet, dass** die Zugkraft (F) der Zugwerkzeuge (8) durch Federkraft aufgebracht wird.

8. Verfahren nach Anspruch 7, **dadurch gekennzeichnet, dass** eine Zugkraft (F) von 200N bis 2000N aufgebracht wird.

## Claims

1. Process for producing attachment elements (5, 6), by forming a head (2, 3) on one end area and forming a tip on the other end area, **characterized in that** a head (2, 3) is formed on both end areas of a blank (1) that exceeds the length of two attachment elements (5, 6) and, after heating of a section (4), of the blank (1), lying between the heads (2, 3) formed, is drawn axially apart until separation occurs in the heated section (4).

2. Process in accordance with claim 1, **characterized in that** the heads (2, 3) are formed such that they project beyond the thickness of the blank (1).

3. Process in accordance with claim 1 or claim 2, **characterized in that** the section (4) lying between the heads (2, 3) is heated to 900° C to 1,200° C.

4. Process in accordance with one of claims 1 to 3, **characterized in that** the length of the section (4) is 2 to 8 times the thickness of the blank (2).

5. Process in accordance with one of claims 1 to 4, **characterized in that** the section (4) is inductively heated.

6. Process in accordance with one of claims 1 to 5, **characterized in that** the blank (1) is pulled axially apart by applying pulling tools (8) to the heads (2, 3).

7. Process in accordance with claim 6, **characterized in that** the traction (F) of the pulling tool (8) is applied by means of spring tension.

8. Process in accordance with claim 7, **characterized in that** traction (F) of 200 N to 2,000 N is applied.

## Revendications

1. Procédé pour la fabrication d'éléments de fixation (5, 6) par formage d'une tête (2, 3) par refoulement à une zone d'extrémité ainsi que par façonnage d'une pointe à l'autre zone d'extrémité, **caractérisé en ce qu'**à chacune des deux zones d'extrémité d'une ébauche (1) excédant la longueur de deux éléments de fixation (5, 6) est formée par refoulement une tête (2, 3) et, par chauffage d'une portion (4) située entre les têtes refoulées (2, 3), l'ébauche (1) est étirée axialement pour la diviser dans la portion chauffée (4).

2. Procédé selon la revendication 1, **caractérisé en ce que** des têtes (2, 3) avec un contour extérieur dépassant du contour extérieur de l'ébauche (1) dans une direction perpendiculaire à l'extension longitudinale de l'ébauche (1) sont formées par refoulement.

3. Procédé selon la revendication 1 ou 2, **caractérisé en ce que** la portion (4) située entre les têtes (2, 3) est chauffée entre 900 °C et 1 200 °C.

4. Procédé selon une des revendications 1 à 3, **caractérisé en ce que** la longueur de la portion (4) correspond à 2 à 8 fois l'épaisseur s'étendant perpendiculairement à l'extension longitudinale de l'ébauche (1).

5. Procédé selon une des revendications 1 à 4, **caractérisé en ce que** la portion (4) est chauffée par induction.

6. Procédé selon une des revendications 1 à 5, **caractérisé en ce que** l'ébauche (1) est étirée axialement par application d'outils de traction (8) sur les têtes (2, 3).

7. Procédé selon la revendication 6, **caractérisé en ce que** la force de traction (F) des outils de traction (8) est appliquée par une force élastique.

8. Procédé selon la revendication 7, **caractérisé en ce que** la force de traction (F) appliquée est de 200 N à 2 000 N.
